# EUROPÄISCHE PATENTSCHRIFT

(11) **EP 2 492 077 B1**
(45) Veröffentlichungstag und Bekanntmachung des Hinweises auf die Patenterteilung: **18.11.2015**
(21) Anmeldenummer: 12151088.7
(22) Anmeldetag: 13.01.2012
(51) Int. Cl.: B29B 13/00, B29C 44/34, C08J 9/224, B29C 59/00

(54) **Verfahren und Vorrichtung zur Erhöhung der Polarität der Oberfläche eines EPP-Formteiles**
Method and device for increasing the polarity of the surface of an EPP moulded part
Procédé et dispositif d'augmentation de la polarité de la surface d'une pièce de formage EPP

(30) Priorität: 22.02.2011 DE 102011004502; 09.03.2011 DE 102011005261
(43) Veröffentlichungstag der Anmeldung: 29.08.2012
(73) Patentinhaber: Bayerische Motoren Werke Aktiengesellschaft, 80809 München (DE)
(72) Erfinder: Geltinger, Andreas, 84163 Marklkofen (DE); Lehner, Martin, 84030 Ergolding (DE)

(56) Entgegenhaltungen:
- US-A1- 2003 124 335
- US-A1- 2003 162 012
- US-A1- 2004 256 757
- US-A1- 2005 025 956
- US-A1- 2010 173 116

## Beschreibung

Die Erfindung bezieht sich auf ein Verfahren zur Erhöhung der Polarität der Oberfläche eines Formteiles aus expandiertem Polypropylen (EPP) nach dem Oberbegriff des Anspruchs 1. Sie hat auch eine Vorrichtung zur Durchführung des Verfahrens zum Gegenstand.

Wie Formteile aus den meisten Kunststoffen haben auch Formteile aus PP eine unpolare Oberfläche, so dass sie nur mit Klebstoffen oder nach einer Oberflächenbehandlung mit anderen Teilen fest verbunden werden können.

Um die Polarität der Oberfläche eines EPP-Formteils zu erhöhen, wird nach dem Stand der Technik die Oberfläche des fertigen EPP-Formteiles in einem separaten Schritt einem oberflächenbehandlungsverfahren unterworfen, beispielsweise einer Corona-Behandlung, alternativ einer Flamm- oder Plasmabehandlung, einer Fluorierung oder einer Behandlung mit einem Primer.

Die Oberflächenbehandlung des EPP-Bauteiles stellt einen separaten Arbeitsschritt dar, der mit mehreren Nachteilen verbunden ist. So ist ein entsprechendes Handling des EPP-Formteiles notwendig, um es nach der Entnahme aus dem Formwerkzeug in eine Oberflächenbehandlungsstation überzuführen. Dadurch wird zudem die Zykluszeit verlängert. Ferner ist für die Oberflächenbehandlung, beispielsweise die Corona-Behandlung, die meist mit einem Roboter erfolgt, eine kostenaufwändige Aufnahme für das Formteil erforderlich, um die elektrische Entladung durch exaktes Positionieren des Formteiles möglichst gleichmäßig über die Formteiloberfläche zu verteilen, also insbesondere sogenannte "hot spots" zu vermeiden.

Die US 2004/256757 offenbart ein Verfahren zur Erhöhung der Polarität der Oberfläche eines Formteiles aus expandiertem Polypropylen (EPP) durch ein Oberflächenbehandlungsverfahren, wobei das EPP-Formteil durch Bedampfen von expandierten Polypropylen-Partikeln in einer Form gebildet wird, wobei die EPP-Partikel dem Oberflächenbehandlungsverfahren vor dem Bedampfen in der Form unterworfen werden

Aufgabe der Erfindung ist es, ein Verfahren zur Herstellung von solchen EPP-Formteilen bereitzustellen, bei dem die einzelnen EPP-Partikel durch die Vorbehandlungseinheit optimal erreicht werden können, um eine homogene Oberflächenbehandlung der EPP-Partikel zu erzielen.

Dies wird erfindungsgemäß mit dem in Anspruch 1 gekennzeichneten Verfahren und der Vorrichtung nach Anspruch 3 erreicht.

Bei der Herstellung von EPP-Formteilen wird die Form mit EPP-Partikeln gefüllt und anschließend bedampft, um die EPP-Partikel zu versintern. Nach der Erfindung werden die EPP-Partikel dem Oberflächenbehandlungsverfahren dabei vor dem Bedampfen, insbesondere vor dem Füllen der Form einer Oberflächenbehandlung unterworfen.

Damit wird ein EPP-Formteil erhalten, das an seiner Oberfläche eine hohe homogene Polarität aufweist, wobei sogenannte "hot spots", wie sie beispielsweise sonst bei einer Corona-Behandlung an der Oberfläche des Formteiles auftreten können, vermieden werden.

Dabei werden auch solchen Bereichen der Formteiloberfläche eine hohe Polarität verliehen, die sonst kaum oder nur schwer einem oberflächenbehandlungsverfahren zugänglich sind, beispielsweise Hinterschneidungen, Ausnehmungen, Bohrungen und dergleichen. Insbesondere wird bei der Weiterverarbeitung des Formteiles zu einem zusammengesetzten Erzeugnis durch die erfindungsgemäße Oberflächenbehandlung der PP-Partikel vor dem Bedampfen in der Form die Zykluszeit zur Herstellung des zusammengesetzten Erzeugnisses praktisch nicht verlängert. D. h. das erfindungsgemäße Verfahren kann "in-line" während der Herstellung des EPP-Formteiles und damit der Herstellung des zusammengesetzten Erzeugnisses durchgeführt werden.

Ferner fallen keine Kosten für eine separate Aufnahme des fertigen Formteiles für die Oberflächenbehandlung mehr an. Auch kann auf einen Klebstoff bei der Herstellung eines zusammengesetzten Erzeugnisses mit dem erfindungsgemäß hergestellten Formteil häufig ganz verzichtet werden.

Für die Oberflächenbehandlung der EPP-Partikel sind erfindungsgemäß alle Verfahren geeignet, die zu einer Erhöhung der Polarität an der Oberfläche der EPP-Partikel führen, also zur Bildung polarer funktioneller Gruppen wie der von Alkoholen, Aldehyden, Carbonsäure, Ester, Ether oder Peroxiden. Durch die Einführung der polaren funktionellen Gruppen in die Oberfläche der EPP-Partikel wird zugleich die Oberflächenspannung der EPP-Partikel und damit die Oberflächenspannung des EPP-Formteiles erhöht.

Die Oberflächenbehandlung der EPP-Partikel kann durch Corona-Behandlung erfolgen, bei der die EPP-Partikel einer elektrischen Hochspannungsentladung ausgesetzt sind, Stattdessen können die EPP-Partikel auch beflammt oder durch Plasma-Behandlung einem Plasma, also Ionen, Elektronen und dergleichen elektrisch geladenen Teilchen, ausgesetzt werden.

Ferner können die EPP-Partikel zur Oberflächenbehandlung mit einem reaktiven Gas, insbesondere mit Fluor behandelt werden. Auch ist es möglich, die Oberfläche der EPP-Partikel mit einem Primer zu behandeln, also einer Flüssigkeit, die die Polarität und damit die Oberflächenspannung der Oberfläche der EPP-Partikel erhöht.

Die EPP-Partikel können unterschiedlich geformt, also beispielsweise kugelförmig, als Hohlzylinder oder in anderer Weise ausgebildet sein. Die Form kann durch ein Formwerkzeug, eine PP-Schäummaschine oder dergleichen ggf. auch durch einen Extruder gebildet sein.

Das nach dem erfindungsgemäßen Verfahren hergestellte EPP-Formteil, das eine erhöhte Polarität an seiner Oberfläche aufweist, ist insbesondere dazu bestimmt, zu einem zusammengesetzten Erzeugnis verbunden zu werden.

Dazu kann das erfindungsgemäß hergestellte EPP-Formteil mit wenigstens einem anderen Körper verbunden werden. Der andere Körper kann eine Beschichtung aus einer Masse, z. B. ein Beschichtungsstoff, eine Folie oder beispielsweise ein Textilmaterial sein. So kann das erfindungsgemäß hergestellte EPP-Formteil beispielsweise mit einer Haptik-, einer Optik- oder einer Schutzschicht versehen werden.

Der andere Körper kann aus Kunststoff, Metall oder Holz bestehen. Der Kunststoff, aus dem der andere Körper besteht, kann ebenfalls ein EPP-Formkörper oder ein ggf. faserverstärkter Körper aus einem anderen Kunststoff, beispielsweise einem anderen Polypropylen-Kunststoff, einem anderen Polyolefin, wie Polyethylen, Polyamid, Polycarbonat, Polyester oder ABS oder ein Gemisch aus mehreren unterschiedlichen Polymeren sein.

Außer zur Verbindung mit einer Beschichtung oder dergleichen flächigem Körper, wie einer Folie, Textilmaterial oder dergleichen ist das erfindungsgemäß hergestellte EPP-Formteil insbesondere zur Verbindung mit räumlichen Körpern, also insbesondere zur Verbindung mit weiteren Form- oder Bauteilen geeignet.

Das erfindungsgemäß hergestellte EPP-Formteil ist insbesondere im Automobilbereich einsetzbar, insbesondere zur Herstellung von Teilen der Innenausstattung, wie Instrumententafel, Mittelkonsole, Türverkleidung, Kofferraumverkleidung und dergleichen. Dabei kann das weitere Bauteil, das mit dem EPP-Formteil verbunden wird, beispielsweise ein Anbauteil, wie ein Lüftergitter, ein Abstandshalter, ein Scharnier oder dergleichen, oder ein Befestigungsteil beispielsweise an der Rückseite des EPP-Formteiles sein.

Die Verbindung zu dem zusammengesetzten Erzeugnis kann kleberlos erfolgen, wodurch die Zykluszeit weiter verringert wird.

Nachstehend ist die Erfindung anhand der beigefügten Zeichnung beispielhaft näher erläutert. Darin zeigen jeweils schematisch
Figur 1 eine Vorrichtung zur Herstellung eines EPP-Formteiles;
Figur 2.1 bis 2.4 einen Schnitt durch die Form beim Schließen, Befüllen und Bedampfen der Form sowie Entformen des EPP-Formteiles;
Figur 3 einen Abschnitt der Förderstrecke für die EPP-Partikel der erfindungsgemäßen Vorrichtung mit einer Vorbehandlungseinheit zur Oberflächenbehandlung der EPP-Partikel.

In den Figuren 4 bis 6 sind weitere Vorrichtungen zur Herstellung eines EPP Formteiles gezeigt, die zum besseren Verständnis des technischen Hintergrunds der Erfindung beitragen sollen.

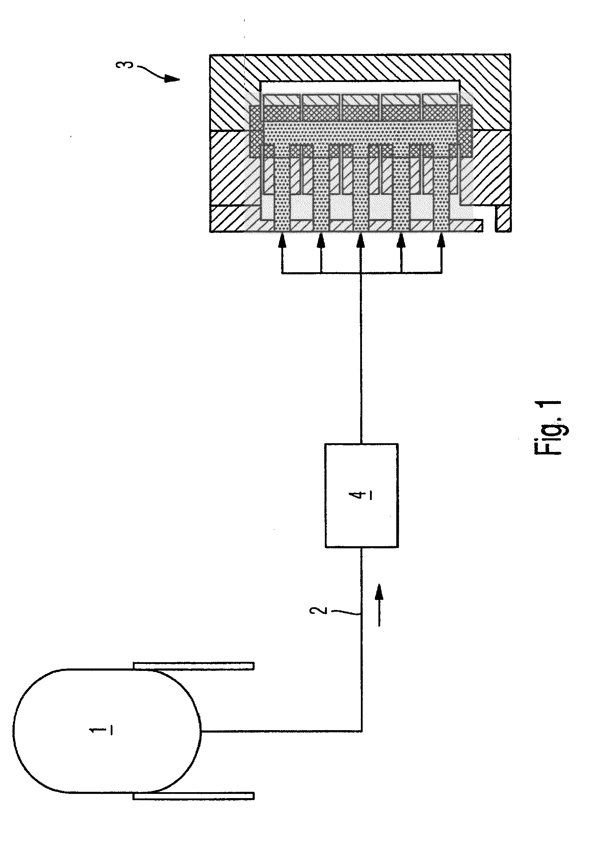

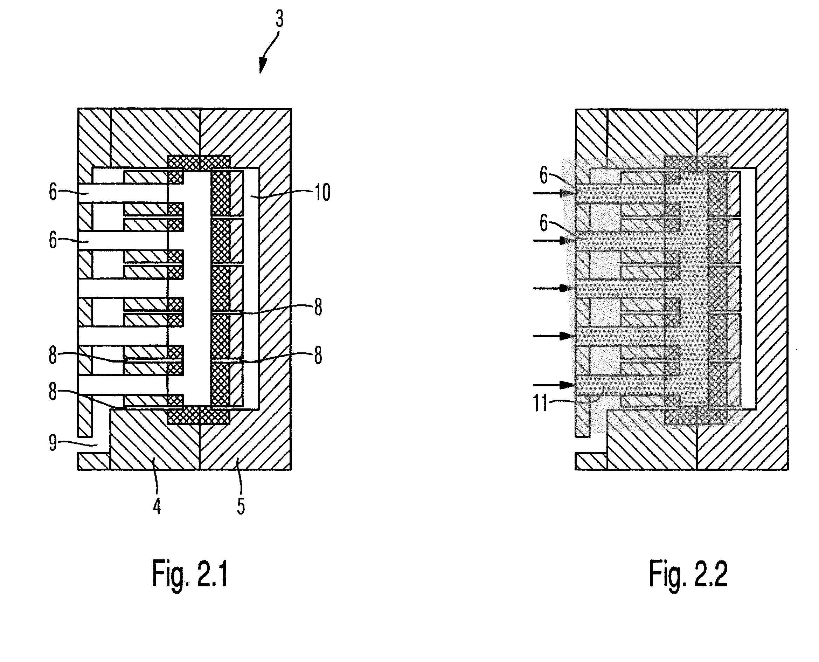

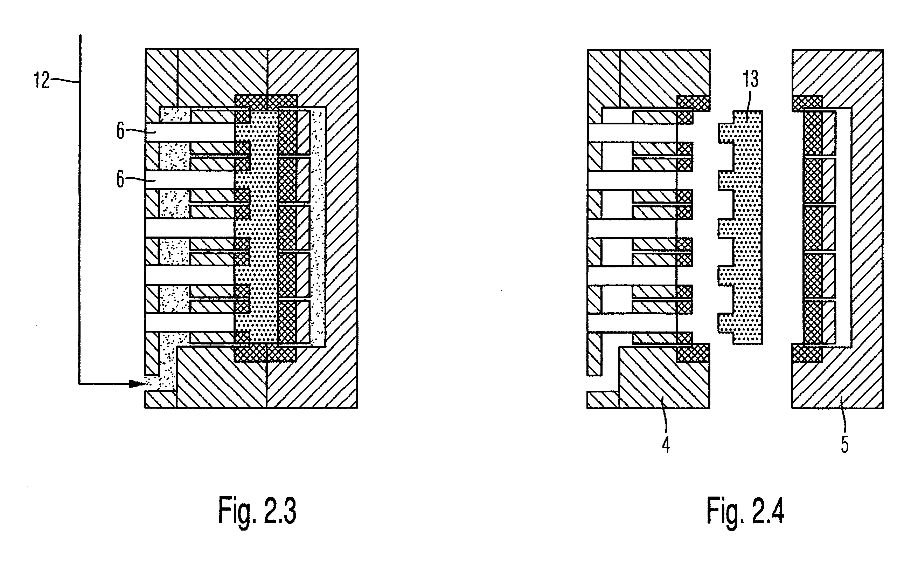

Gemäß Figur 1 besteht die Vorrichtung aus einem Zwischenbehälter 1, der mit EPP-Partikeln gefüllt ist, von dem die EPP-Partikel 11 (vergleiche Figur 2 bis 3) über eine Förderstrecke 2, beispielsweise eine Förderleitung, der Form 3, also beispielsweise einem Formwerkzeug zugeführt werden. In der Förderstrecke 2 ist eine Vorbehandlungseinheit 4 zur Oberflächenbehandlung der über die Förderstrecke 2 dem Formwerkzeug 3 zugeführten PP-Partikel 11 vorgesehen.

Wie aus Figur 2.1 bis Figur 2.4 ersichtlich, besteht das Formwerkzeug 3 aus zwei Teilen 4 und 5. Das Formwerkzeug 3 weist zur Zufuhr der EPP-Partikel 11 Zufuhrkanäle 6, sogenannte "Füller", auf, die verschließbar sind. Die beiden Teile 4 und 5 der Form 3 sind mit Dampfdurchtrittsöffnungen 8 versehen, um das Innere des Formwerkzeugs 3 mit über die Kanäle 9, 10 zugeführtem Wasserdampf zu bedampfen.

Bei geschlossenem Formwerkzeug 3 gemäß Figur 2.1 und nachdem die Füller 4 aus den Zufuhrkanälen 6 entfernt worden sind, werden die mit der Vorbehandlungseinheit 4 oberflächenbehandelten PP-Partikel 11 mittels Druckluft in das Formwerkzeug 3 befördert (Figur 2.2). Nach Befüllung des Formwerkzeugs 3 werden die Zufuhrkanäle oder Füller 6 verschlossen und die aneinander anliegenden EPP-Partikel 11 in dem Formwerkzeug 3 mit Heißdampf 12 beaufschlagt, wodurch, wie in Figur 2.3 dargestellt, die oberflächenbehandelten EPP-Partikel 11 sintern, also an ihren Berührungspunkten miteinander verschmelzen. Nach dem kühlen und Entformen kann das EPP-Bauteil 13 aus dem Formwerkzeug 3 entnommen werden (Figur 2.4).

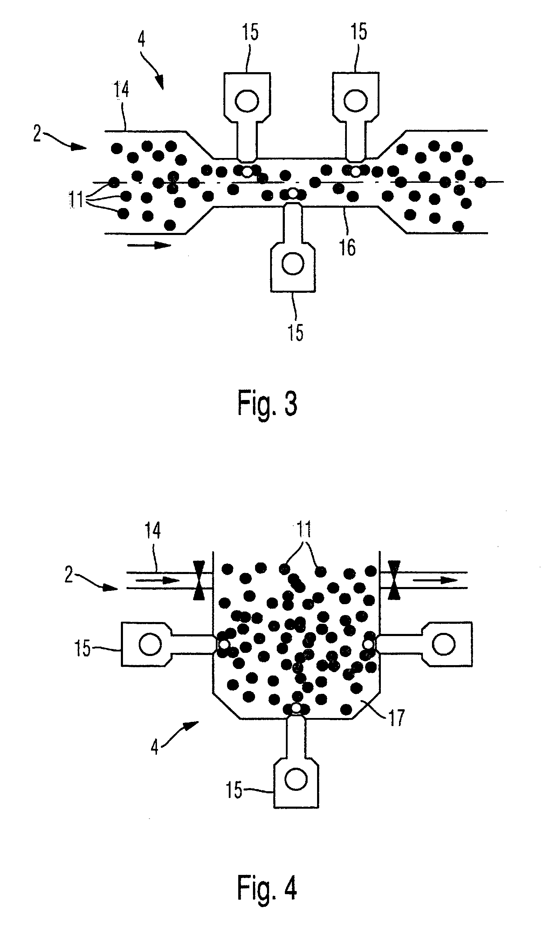

Gemäß Figur 3 wird die Förderstrecke 2 durch ein Rohr oder dergleichen Leitung 14 gebildet, an der die Vorbehandlungseinheit 4 angeordnet ist.

Die Vorbehandlungseinheit 4 kann dabei mehrere Elektroden oder Düsen z. B. in Form von Lanzen 15 aufweisen, mit denen die Polarisierung der Oberfläche der EPP-Partikel 11 durchgeführt wird. Dabei kann mit den Elektroden oder Düsen 15 eine Corona- oder Plasmabehandlung oder eine Beflammung der Oberfläche der EPP-Partikel 11 durchgeführt werden. Auch kann damit ein Fluorgas zugeführt werden, um die Oberfläche der EPP-Partikel 11 zu fluorieren.

Nach Figur 3 weist die Leitung 14 im Bereich der Vorbehandlungseinheit 4 eine partielle Verjüngung 16 auf, wodurch ein enger Spalt gebildet wird, so dass die einzelnen EPP-Partikel 11 durch die Vorbehandlungseinheit 4 optimal erreicht werden. D. h. der Durchmesser der Verjüngung ist z. B. maximal 5 Mal größer als der Durchmesser der Partikel 11.

Nach Figur 4 ist in der Förderstrecke 2 eine Kammer 17 angeordnet, in der die EPP-Partikel 11 für eine bestimmte Zeit verweilen, um durch Verwirbelung beispielsweise durch Luft oder Mischerelemente immer wieder an den Lanzen 15 der Vorbehandlungseinheit 4 vorbeigeführt zu werden. Nach der Verweilzeit in der Kammer 17 werden die oberflächenbehandelten EPP-Partikel 11 weiter zum Formwerkzeug 3 befördert.

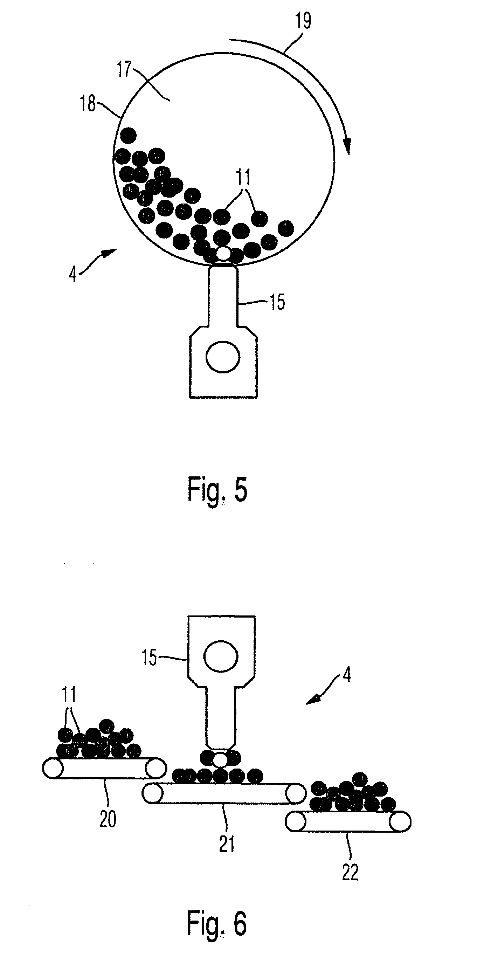

Gemäß Figur 5 wird die Kammer 17 durch eine entsprechend dem Pfeil 19 umlaufende Trommel 18 gebildet.

Nach Figur 6 weist die Förderstrecke 2 Transportbänder 20, 21, 22 auf, auf denen die EPP-Partikel 11 verteilt sind, um mit der Vorbehandlungseinheit 4 oberflächenbehandelt zu werden. Um eine optimalere Behandlung der einzelnen EPP-Partikel zu erreichen, weist dabei das zwischengeschaltete Transportband 21, an dem die Vorbehandlungseinheit 4 angeordnet ist, eine höhere Geschwindigkeit als das in Transportrichtung vorgeschaltete und nachgeschaltete Transportband 20 bzw. 22 auf, wodurch die EPP-Partikel 11 auf dem zwischengeschalteten Transportband 21 weiter auseinander verteilt liegen.

## Patentansprüche

1. Verfahren zur Erhöhung der Polarität der Oberfläche eines Formteiles aus expandiertem Polypropylen (EPP) durch ein Oberflächenbehandlungsverfahren, wobei das EPP-Formteil durch Bedampfen von expandierten Polypropylen-Partikeln (11) in einer Form gebildet wird, wobei die EPP-Partikel (11) dem Oberflächenbehandlungsverfahren vor dem Bedampfen in der Form (3) unterworfen werden, **dadurch gekennzeichnet, dass** die EPP-Partikel (11) der Form (3) von einem Vorratsbehälter (1) über eine Förderstrecke (2) mit einer Leitung, die eine Verjüngung aufweist, zugeführt werden, an der eine Vorbehandlungseinheit (4) für die Oberflächenbehandlung der PP-Partikel (11) angeordnet ist.

2. Verfahren nach Anspruch 1, **dadurch gekennzeichnet, dass** als Oberflächenbehandlungsverfahren, welchem die PP-Partikel (11) unterworfen werden, eine Corona-, Flamm-, oder Plasma-Behandlung oder eine Fluorierung oder eine Behandlung mit einem Primer durchgeführt wird.

3. Vorrichtung, mit der das Verfahren nach dem Anspruch 1 oder 2 durchgeführt wird, **dadurch gekennzeichnet, dass** die Förderstrecke (2) durch eine Leitung (14) gebildet wird, wobei die Leitung (14) eine Verjüngung (16) aufweist und die Vorbehandlungseinheit (4) an der Verjüngung (16) vorgesehen ist.

4. Anwendung des Verfahrens nach Anspruch 1 oder 2 zum Verbinden des EPP-Formteiles (13) mit wenigstens einem anderen Körper zu einem zusammengesetzten Erzeugnis.

## Claims

1. A method of increasing the surface polarity of an expanded polypropylene (EPP) moulding by surface treatment, wherein the EPP moulding is formed by vapour-deposition of expanded polypropylene particles (11) in a mould, wherein the EPP articles (11) undergo the surface treatment before vapour-deposition in the mould (3), **characterised in that** the EPP particles (11) are supplied to the mould (3) from a storage container (1) via a conveyor section (2) comprising a tapering pipe, attached to a pretreatment unit (4) for surface treatment of the PP particles (11).

2. A method according to claim 1, **characterised in that** the surface treatment applied to the PP particles (11) is in the form of corona, flame or plasma treatment or fluorination or treatment with a primer.

3. A device for working the method according to claim 1 or claim 2, **characterised in that** the conveyor section (2) is in the form of a pipe (14), wherein the pipe (14) has a taper or constriction (16) and the pretreatment unit (4) is provided on the taper (16).

4. Use of the method according to claim 1 or claim 2 for connecting the EPP moulding (13) to at least one other body to form a composite product.

## Revendications

1. Procédé pour augmenter la polarité de la surface d'une pièce de forme en polypropylène expansé (EPP), par un procédé de traitement de surface, selon lequel on réalise la pièce de forme EPP par vaporisation de particules de polypropylène expansées (11) dans un moule,
les particules EPP (11) étant soumises au procédé de traitement de surface avant d'être traitées à la vapeur dans le moule (3),
procédé **caractérisé en ce que**
les particules EPP (11) sont fournies au moule (3) à partir d'un réservoir d'alimentation (1) par un chemin de transfert (2) ayant une conduite munie d'un rétrécissement équipé d'une unité de prétraitement (4) pour le traitement de surface des particules PP (11).

2. Procédé selon la revendication 1,
**caractérisé en ce que**
le procédé de traitement de surface pour les particules PP (11) consiste à effectuer un traitement par décharge Corona, un traitement par une flamme, ou un traitement par plasma, ou un traitement de fluor ou un traitement avec un apprêt.

3. Dispositif pour la mise en oeuvre du procédé selon la revendication 1 ou 2,
**caractérisé en ce que**
le chemin de transfert (2) est une conduite (14),
ayant un rétrécissement (16) muni de l'unité de prétraitement (4).

4. Application du procédé selon les revendications 1 ou 2,
pour relier une pièce de forme EPP (13) à au moins une autre pièce pour réaliser un ensemble combiné.
